# EUROPÄISCHE PATENTSCHRIFT

(11) **EP 0 858 364 B1**
(45) Veröffentlichungstag und Bekanntmachung des Hinweises auf die Patenterteilung: **08.03.2000**
(21) Anmeldenummer: 96937276.2
(22) Anmeldetag: 29.10.1996
(51) Int. Cl.: B01F 13/10, B44D 3/06, B01F 15/02, B01F 15/04

(54) **VERFAHREN ZUM DOSIEREN UND DOSIERANLAGE**
METERING METHOD AND SYSTEM
PROCEDE ET SYSTEME DE DOSAGE

(30) Priorität: 30.10.1995 DE 19540449
(43) Veröffentlichungstag der Anmeldung: 19.08.1998
(73) Patentinhaber: Hildenbrand, Ralf, 53721 Siegburg (DE)
(72) Erfinder: Hildenbrand, Ralf, 53721 Siegburg (DE)
(74) Vertreter: Neumann, Ernst Dieter, Dipl.-Ing.
(86) Internationale Anmeldenummer: EP9604690
(87) Internationale Veröffentlichungsnummer: WO9716241

(56) Entgegenhaltungen:
- EP-A- 0 056 170
- EP-A- 0 351 681
- EP-A- 0 391 286
- EP-A- 0 427 497
- EP-A- 0 461 371
- GB-A- 2 242 280
- US-A- 4 867 258
- PATENT ABSTRACTS OF JAPAN vol. 12, no. 165 (C-496), 18.Mai 1988 & JP 62 277136 A (HOYA CORP), 2.Dezember 1987,

## Beschreibung

Die Erfindung betrifft ein Verfahren und eine Vorrichtung zum Dosieren einer oder mehrerer Komponenten von fließfähigen Stoffen, insbesondere von Druckfarben, mit Mitteln zur Bevorratung, in denen eine Mehrzahl von Vorratsbehältern für verschiedene Komponenten enthalten sind, mit Vorratsbehältern, die jeweils Auslaßventilmittel aufweisen, mit zumindest einer Dosierstation, zu der die Vorratsbehälter zuführbar sind, mit Betätigungsmitteln an der Dosierstation, mit denen die Auslaßventilmittel betätigbar sind, mit Fördermitteln, mit denen die Vorratsbehälter der zumindest einen Dosierstation zugeführt werden können.

Eine Vorrichtung dieser Art ist aus der EP 0 391 286 A1 bekannt. Hierbei ist eine Mehrzahl von Kanistern auf einem rotierbaren Drehtisch angeordnet, der zur Zumessung von Einzelkomponenten zu einem Mischungsprodukt jeweils in eine Position gebracht wird, in der ein einzelner Kanister in eine Abgabe- bzw. Dosierstation gedreht wird, woraufhin Betätigungsmittel in der Dosierstation auf den Kanister einwirken, so daß eine definierte Menge der Komponente dort in einen Misch- oder Sammelbehälter zugegeben wird. Jeder der in den Drehtisch eingesetzten Kanister hat integrierte Auslaßventilmittel, die über der Dosierstation zugeordnete Betätigungsmittel gesteuert werden können. Die Zahl der Kanister für einzelne Komponenten ist in einer Vorrichtung der genannten Art durch eine vertretbare Größe des Drehtisches bei gegebener Größe der Einzelkanister limitiert.

Die Kanister umfassen jeweils ein Auslaßventil, das in der in den Drehtisch eingesetzten Position nach unten weist. Als Auslaßventilmittel ist insbesondere ein Kugelhahn vorgesehen. Die Kanister umfassen am zu den Auslaßventilmitteln entgegengesetzen offenen Ende jeweils einen Verdrängerkolben, der von Stellmitteln in der Dosierstation während der Öffnung des Auslaßventiles beaufschlagt und verdrängt wird. Unter dem Verdrängerkolben soll ein Luftpolster den unmittelbaren Kontakt des fließfähigen Mediums, d. h. insbesondere der Druckfarbe mit dem Verdrängerkolben verhindern.

Im Drehtisch ist innerhalb der Kanisteraufnahmen, die auf einem Durchmesser liegen, der für ein Einfahren in die Dosierstation ausgelegt ist, auf einem zweiten inneren Durchmesser ein zweiter Ring von Aufnahmen für Kanister vorgesehen, in denen jeweils umgekehrt stehende Kanister in nicht-betätigbarer Position als Reserve eingesetzt werden können. Hiermit ist ein manuelles Austauschen von entleerten Kanistern gegen Reservekanister in erleichterter Form möglich.

Um die Zahl der zumischbaren Komponenten über die Anzahl der Kanister im Drehtisch zu erhöhen, ist ein Speicher vorgesehen, der ohne jegliche funktionelle Anbindung an den Drehtisch ist und von dem aus Kanister manuell in die Aufnahmen des Drehtisches eingesetzt werden können, wobei sie gegen dort vorhandene ausgetauscht werden müssen.

Die Steuerung geht von einer bestimmten Zuordnung einzelner Kanister zu bestimmten Aufnahmepositionen im Drehtisch aus, da eine Ausgangsposition (home position) sich ausschließlich an der Stellung des Drehtisches orientiert. Ein Marker (flag) für eine Nullstellung ist unmittelbar am Drehtisch angeordnet, weitere Marker sind am Drehtisch für die Wegmessung zu den einzelnen Kanistern angeordnet.

Die Vorrichtung der genannten Art ist damit auf eine begrenzte Anzahl von Komponenten und auf kleine Mengen der Komponenten, die zu mischen sind, zugeschnitten.

Eine Vorrichtung ähnlicher Art ist aus der EP 0 461 371 B1 bekannt, bei der eine Mehrzahl von Vorratsbehältern jeweils eine Farbmasse enthalten und in zueinander fester Anordnung und vorgegebener Anzahl auf einem Drehteller oder auf einem in zwei Richtungen verfahrbaren Schlitten angeordnet sind. Die Vorratsbehälter sind hierbei nach Art von Sprayflaschen mit einer die Farbe enthaltenden elastischen Hülle und einer darüberliegenden Gasblase ausgeführt. Die Gasblase kann unter Vordruck stehen; der Vordruck kann auch ausschließlich durch die Elastizität der elastischen Hüllse erzeugt werden, während die Luftblase darüber Druckausgleich zur Umgebung hat. Jeder der Vorratsbehälter hat integrierte Auslaßventilmittel. In einer Dosierstation, in die jeweils einer der Vorratsbehälter eingesteuert wird, wird mit Stellmitteln das Auslaßventilmittel geöffnet. Ein in der Dosierstation eingesetzter Sammelbehälter belastet eine Waage, die die Stellmittel für die Auslaßventilmittel ansteuert.

Diese Vorrichtung ist darauf ausgelegt, daß die Vorratsbehälter jeweils mit einem Code versehen sind, in dem eine Information über den Inhalt des betreffenden Vorratsbehälters enthalten ist. Dieser Code wird mechanisch abgetastet. Zur Erhöhung der Anzahl der einzelnen Vorratsbehälter ist vorgeschlagen, in einem Drehteller zwei konzentrische Kreise von Aufnahmen vorzusehen oder innerhalb eines Drehtellers Einzelscheiben rotieren zu lassen, die jeweils eine Mehrzahl von Aufnahmen für Vorratsbehälter haben. Ungeachtet dessen ist die Gesamtzahl der Vorratsbehälter durch die Größe des Drehtellers oder des Schlittens begrenzt. Ebenso ist im Hinblick auf die Bauweise der Vorratsbehälter deren Größe als relativ gering anzunehmen. Der genannte Anwendungsfall ist das Herstellen von Mischungen von Haarfarben.

Aus der US-A- 4 867 258 ist eine Vorrichtung zum Herstellen von Mischungen von schüttfähigen pulverförmigen oder granulatförmigen Stoffen bekannt, bei der sowohl eine Mehrzahl von Mischbehältern in einem Magazin zu mehreren angeordnet ist, die einzeln zu einer Dosierstation transportiert werden können, als auch eine Mehrzahl von Pulvervorratsbehältern in einem anderen Magazin angeordnet ist, die ebenfalls zur Zugabe einer Komponente einzeln zur Dosierstation transportiert werden. Die Transportmittel hierfür umfassen einen einzigen linearen Förderschlitten sowie ein querverfahrbares Magazin für die einzelnen Vorratsbehälter. Jeder Vorratsbehälter wird auf diesem linearen Weg in die Dosierstation gefahren und muß von dort aus in seine Position im Magazin zurückverbracht werden, bevor eine Bewegung des Magazins erfolgt und der nächste Vorratsbehälter mit den gleichen Mitteln und auf die gleiche Weise zur Dosierstation transportiert und von dort zurückverbracht wird. Das Magazin enthält nur eine geringe Anzahl von Vorratsbehältern.

Die vorstehenden Anordnungen sind für das Dosieren von Druckfarben in Farbenfabriken oder Druckereibetrieben ungeeignet. Hierbei ist sowohl die Anzahl der benötigten Komponenten ebenso wie die absolute Menge der Farben so groß, daß insgesamt ein Vorrat von mehreren Tonnen Gewicht ständig im Zugriff sein muß. Die Verbräuche der einzelnen Komponenten sind dabei unterschiedlich, so daß ein problemloser Austausch einzelner Vorratsbehälter oder eine Ergänzung möglich sein muß, ohne daß der Betrieb des Dosierens in der zumindest einen Dosierstation dabei unterbrochen werden darf. Hierfür sind Vorrichtungen mit Drehtellern oder Schlitten, die die Gesamtheit der im ungestörten und ununterbrochenen Betrieb abrufbaren Komponenten möglich machen sollen, nicht geeignet. Für den genannten Anwendungsfall sind daher bisher Systeme mit fest installierten Vorratsbehältern und mit Festleitungen von jedem einzelnen Vorratsbehälter zu einer Dosierstation verwendet worden. Jede der Einzelleitungen hat dabei eigene Pumpenmittel sowie eigene Ventilmittel, die frei ansteuerbar sind. Der apparative Aufwand ist erheblich und bedingt hohe Anschaffungs- und Wartungskosten. Die Einzelleitungen enthalten hierbei erhebliche Mengen von Farbe, die ein nicht nutzbares Totvolumen bildet. In den Leitungen ist die Farbe einem verstärkten Altern unterworfen. Ein Austausch von Farben ist mit entsprechenden Verlusten und erheblichem Reiningungsaufwand verbunden.

Hiervon ausgehend ist es die Aufgabe der vorliegenden Erfindung, ein Verfahren und eine Vorrichtung der eingangs genannten Art bereitzustellen, die bei reduziertem apparativen Aufwand die gleichzeitige Verfügbarkeit einer großen Menge von Komponenten im ununterbrochenen und ungestörten Betrieb ermöglicht.

Die Lösung hierfür liegt in einem Verfahren, das sich dadurch auszeichnet, daß einzelne Vorratsbehälter unabhängig voneinander den Mitteln zur Bevorratung entnommen, der Dosierstation zugeführt und in die Mittel zur Bevorratung zurückgeführt werden und daß sie dabei zumindest eine schleifenförmige Bahn durchlaufen.

Die Lösung liegt weiter in einer Vorrichtung, die sich dadurch auszeichnet, daß die Mittel zur Bevorratung von einem Lager zum Einstellen der Vorratsbehälter gebildet werden, daß die Fördermittel zum Entnehmen und Rückführen von einzelnen Vorratsbehältern in voneinander unabhängiger Weise ausgebildet sind und daß die Fördermittel zumindest eine Bahnschleife umfassen, an die die zumindest eine Dosierstation angebunden ist.

Mit dem erfindungsgemäßen Verfahren wird es möglich, nur die für einen bestimmten Dosierungsvorgang erforderliche Teilmenge von Vorratsbehältern aus einer insgesamt großen bevorrateten Menge von Vorratsbehältern zur Dosierstation zu fördern; die Führung in einer Bahnschleife ermöglicht dabei den zeitgleichen Ablauf von Zuführ-, Dosier- und Rückführphasen der verschiedenen bei diesem Dosiervorgang benötigten Vorratsbehälter.

Die erfindungsgemäße Vorrichtung kann hiermit aus einem in der Größe nicht fest vorgegebenen und ggfs. erweiterbaren ausbaufähigen Lager und relativ einfachen und in ihrer Konfiguration fest vorgegebenen Fördermitteln zum Transport und zur Handhabung der Vorratsbehälter und aus zumindest einer Dosierstation aufgebaut sein. Die einzelnen Vorratsbehälter können in kurzer zeitlicher Reihenfolge in die Bahnschleife eingesteuert werden, ohne daß es erforderlich ist, abzuwarten, bis die zuvor eingeschleusten Vorratsbehälter in das Lager zurückgeführt sind.

Das Lager kann bei geeigneter Kodierung der Vorratsbehälter chaotisch organisiert sein, d. h. jeder rücklaufende Vorratsbehälter wird auf den nächstliegenden Stellplatz eingestellt, der beispielsweise gerade von einem weiteren in die Bahnschleife eingeschleusten Vorratsbehälter freigeworden ist. Als Lager kommt insbesondere ein zwei- oder mehrstöckiges Regallager in Betracht.

Der wesentliche Vorteil gegenüber Vorrichtungen, die bisher auf dem bevorzugten Anwendungsgebiet verwendet wurden, liegt in dem völligen Wegfall der teuren und wartungsintensiven Pumpen und einzelnen Leitungsführungen. Sie werden durch technisch wesentlich anspruchslosere Fördermittel für die Vorratsbehälter ersetzt. Der Energieeinsatz für den Farbtransport ist wesentlich geringer, da insbesondere bei pastösen Farben in den Einzelleitungen hohe Druckverluste überwunden werden müssen. Die Reinigungskosten sind erheblich niedriger, da die Vorratsbehälter im Vergleich mit Leitungen und Pumpen einfach zu reinigen sind.

Es ist in vorteilhafter Weise möglich, für Komponenten, die in größerer Menge oder in größerer Häufigkeit benötigt und zugemischt werden, gleichzeitig mehrere einheitliche Vorratsbehälter im Magazin im ständigen Zugriff vorzusehen.

Ein Datenerfassungs- und Datenverarbeitungssystem zur Steuerung der Vorrichtung umfaßt eine Lagerverwaltungseinheit für die im Lager befindlichen Vorratsbehälter und deren aktuelle Inhalte, eine Transportsteuerungseinheit zur Steuerung der Fördermittel, eine Dosiersteuerungseinheit für die Dosierstation, wobei jeweils die in der Dosierstation abgegebene Menge erfaßt und in der Lagerverwaltungseinheit registriert wird. Das Datenverarbeitungssystem umfaßt weiterhin eine Rezepturverwaltungseinheit, in der eine Vielzahl von Rezepturen abgespeichert ist. Daneben ist eine interaktive Auftragsverwaltungseinheit zur Eingabe und Bestätigung von Aufträgen zur Ausführung von Dosierungen vorhanden.

Die Fördermittel, insbesondere im Bereich der Bahnschleife selber können angetriebene Rollenbahnen, Hängebahnen oder Flurfördermittel üblicher Art sein. Im Bereich der Anbindung des Lagers an die Bahnschleife sind auch halbautomatisierte personengesteuerte Fördermittel möglich, d. h. es ist eine halbautomatisierte Übergabe mittels Staplerfahrzeug möglich, bei dem die Steuerungsbefehle für den Fahrzeugbediener von dem zentralen Steuerungssystem herrühren. Dieses muß dem Fahrer anzeigen, welche Vorratsbehälter er in welcher Reihenfolge an das Fördersystem zu übergeben bzw. ggfs. auch auf welche lagegünstigsten Stellplätze er zurücklaufende Vorratsbehälter im Lagersystem abzustellen hat. Es ist jedoch auch möglich, ausschließlich fest installierte Fördermittel für die Vorratsbehälter zwischen dem Lager und der Dosierstation vorzusehen. Leere Vorratsbehälter können in einen bestimmten Wechselbereich im Lager gesteuert werden.

Der Begriff 'Bahnschleife' umfaßt jeden Bahnverlauf, der zwischen Lager und Dosierstation zumindest einen Zuführstrang und einen Rückführstrang umfaßt. Die Bahnschleife kann eine offene U-förmige Schleife sein, die unmittelbar an lagerinterne Verteilermittel anschließt oder eine geschlossene Schleife, die über eine kurze eingleisige Anschlußverbindung an lagerinterne Verteilermittel angeknüpft ist.

Innerhalb der Bahnschleife ist ein Transport ausschließlich im Sinne einer Einbahnförderung bevorzugt.

Innerhalb der Bahnschleife können mehrere Dosierstationen angeordnet sein. Dies ist insbesondere dann günstig, wenn gleichzeitig identische Dosierungen für mehrere Verbraucher hergestellt werden sollen, oder wenn gleichzeitig verschiedene Dosierungen unter Verwendung gleicher Komponenten oder zumindest überwiegend gleicher Komponenten hergestellt werden sollen. Wird eine Komponente in einer Dosierung nicht benötigt, so kann sie durch die entsprechende Dosierstation durchgeschleust oder über einen Bypaß an dieser vorbeigeschleust werden. Hierbei kann die Bahnschleife selber als Puffer zur Zwischenlagerung ausgelegt werden oder über einen Parallelstrang eine Pufferstrecke eingerichtet werden.

Um die Flexibilität der Förderung zu erhöhen ist es möglich, Zuführstrang und Rückführstrang insbesondere in der Nähe der Dosierstation mit einer Kurzschlußleitung zu verbinden.

Die Vorratsbehälter können einfache Transportbehälter von zylindrischer oder kubischer Form sein, in die eine Ablaßöffnung mit einem Verschlußstopfen im Boden fest eingesetzt ist. An der entgegengesetzten oberen Deckelöffnung kann ein Transportdeckel vorgesehen sein. Zum Einsatz kann der Transportdeckel entfernt werden und eine abdichtende Verdrängerplatte in die Deckelöffnung eingesetzt werden. Gleichzeitig ist der Verschlußstopfen zu entfernen und durch ein Ventil im Boden zu ersetzen. Die Verdrängerplatte kann von einem Stellkolben in der Dosierstation beaufschlagt werden, um Farbe aus dem gleichzeitig zu öffnenden Venil auszupressen.

Nach einer anderen Ausführung kann ein Vorratsbehälter mit fest geschlossenem Deckel ausgebildet sein, in dem eine Gewindeöffnung für ein Anschlußventil für einen Druckgasanschluß vorgesehen ist. Hierbei kann in der Dosierstation das Auspressen der Flüssigkeit ausschließlich über die Aufgabe von Druckgas erfolgen. Das Ventil in der Ablaßöffnung ist, wie vorher beschrieben, gleichzeitig zu öffnen. Das Druckgas sollte hierbei ein Inertgas sein.

Eine andere Ausführung der Vorratsbehälter kann darin bestehen, daß diese einfache Transportbehälter mit geschlossenem Boden darstellen, in deren Deckelöffnung nach Entfernen eines Transportdeckels eine Verdrängerplatte eingesetzt wird, die ein darin gleitend geführtes Steigrohr mit einem Ventil aufweist. Dies ist insbesondere für dünnflüssige Farbe günstig. Beim Vorschieben der Verdrängerplatte sind wieder die Ventilmittel zu öffnen.

Weitere bevorzugte Merkmale sind in den Unteransprüchen genannt, auf die hiermit Bezug genommen wird. Sie sind aus sich heraus verständlich.

Bevorzugte Ausführungsbeispiele der Erfindung sind anhand der Zeichnungen dargestellt.

Es zeigt
- Fig. 1: ein Prinzipbild der Komponenten der vorliegenden Erfindung;
- Fig. 2: eine Draufsicht auf eine erfindungsgemäße Vorrichtung in prinzipieller Darstellung;
- Fig. 3: einen Vorratsbehälter
a) in einer ersten Ausführung
b) in einer zweiten Ausführung;
- Fig. 4: eine Dosierstation
a) in einer ersten Ausführung
b) in einer zweiten Ausführung;
- Fig. 5: ein Steuerungsschema für die elektronische Steuerung der Gesamtanlage.

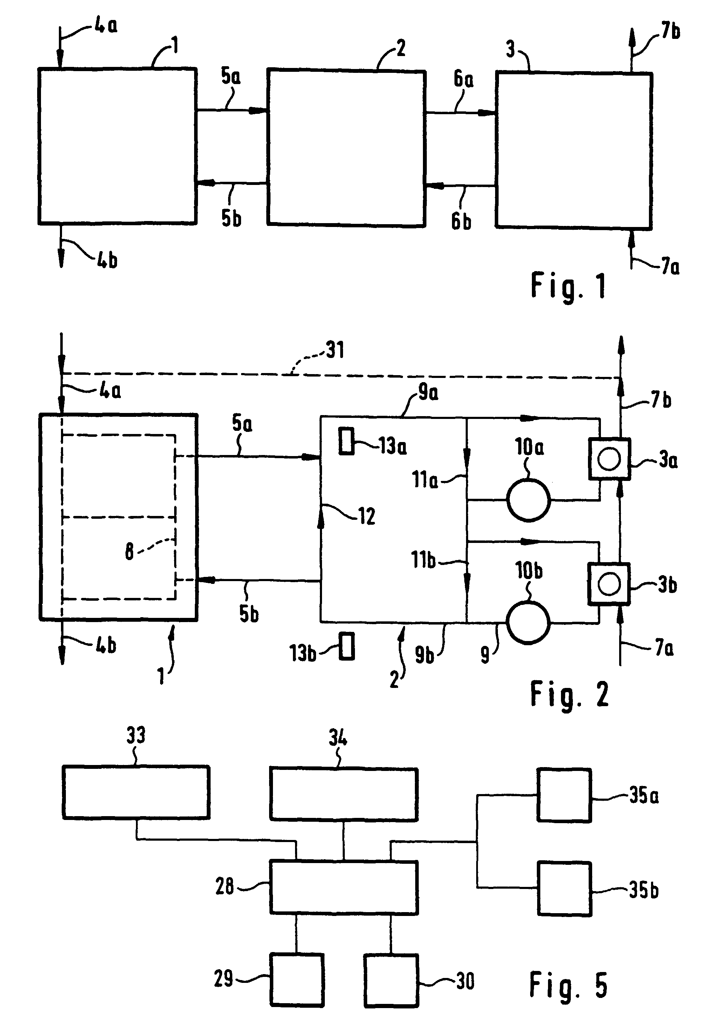

In Figur 1 sind die drei prinzipiellen Einheiten der erfindungsgemäßen Vorrichtung in ihrer Verknüpfung dargestellt, nämlich chaotisches Lagersystem 1, Fördersystem 2 mit intelligenter Steuerung und Abfüll- und Dosiersystem 3. Wie am Lagersystem 1 durch ein- und ausgehende Pfeile 4a, 4b dargestellt ist, hat dieses eine Schnittstelle nach außen, zum Entnehmen von leeren Vorratsbehältern und Eingeben von gefüllten Vorratsbehältern.

Die durch zwei gegenläufige Pfeile 5a, 5b angedeutete Verbindung zwischen Lagersystem 1 und Fördersystem 2 erfolgt bevorzugt an gesonderten Ein- und Ausgabestellen, die jedoch auch identisch sein können.

Die Verbindungen zur Übergabe und Rückführung vom Fördersystem 2 in das Abfüll- und Dosiersystem 3 und aus diesem heraus sind durch zwei Pfeile 6a, 6b dargestellt. Je nachdem, wie das Abfüll- und Dosiersystem 3 in das Fördersystem 2 integriert ist, können auch hier gesonderte Ein- und Ausgabestellen vorhanden sein, oder diese miteinander identisch sein.

Mit 7a und 7b ist durch ein- und ausgehende Pfeile das Zuführen und Abführen von Dosierbehältern in das Abfüll- und Dosiersystem angedeutet.

In Figur 2 ist in Draufsicht das Lager 1 gezeigt, in dem mit gestrichelten Linien einzelne lagerinterne Verteilerbahnen 8 angedeutet sind. Vom Lager 1 ausgehend sind wiederum die Zuführund Rückführbahnen 5a, 5b zum Anschluß an das Fördersystem 2 im engeren Sinne gezeigt. Die Bahnen 5a, 5b sind in dieser Ausführung wie durch Pfeile angedeutet als Einwegbahnen ausgelegt. Das Fördersystem umfaßt weiter eine Bahnschleife 9, die im Uhrzeigersinn als Einbahnweg durchlaufen wird. In der Bahnschleife 9 sind zwei Dosierstationen 3a, 3b und zwei Reinigungsstationen 10a, 10b erkennbar. Ein Bahnstrang 11a, 11b ist jeweils als Bypaßleitung im Verhältnis zu den Dosierstationen 3a, 3b angeordnet. Die Zuführ- und Rückführstränge 9a, 9b der Bahnschleife 9 sind über einen Bahnstrang 12 verbunden, der als Kurzschlußleitung dient. Eine erste Identifizierungsstelle 13a erfaßt die Vorratsbehälter unmittelbar nach dem Einsteuern in die Bahnschleife, eine zweite Identifizierungsstelle 13b unmittelbar vor dem Verlassen der Bahnschleife. Mit 7a und 7b ist der Weg für Abfüll- und Dosierbehälter durch die Dosierstationen 3a, 3b angedeutet. Eine gestrichelt gezeichnete Verbindungsbahn 31 zeigt, daß einzelne Dosierungen als Sonderfarben ins Lager eingesteuert werden können. Sofern ein Umfüllen vermieden werden soll, müssen hierfür Vorratsbehälter in die Dosierstation eingesteuert werden.

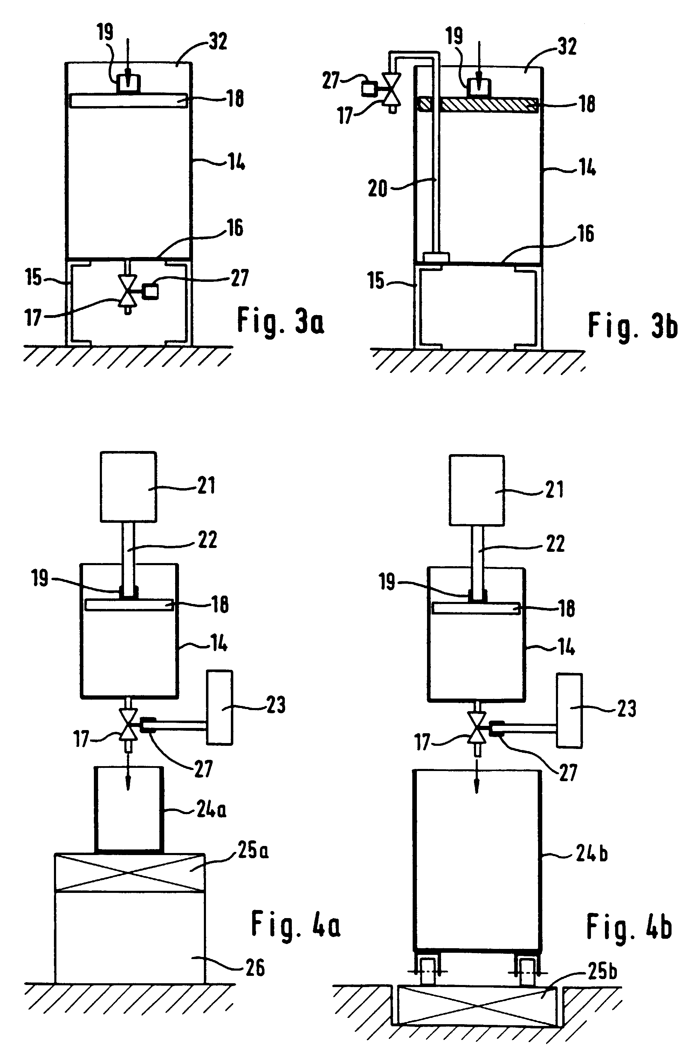

In Figur 3a ist ein Vorratsbehälter 14 in erster Ausgestaltung dargestellt, der Füße 15 aufweist und in seinem Boden 16 symbolisch gezeigte Ablaßventilmittel 17 aufweist. Die obere Öffnung 32 ist durch eine Verdrängerplatte 18 verschlossen, die einen Adapter oder ein Kupplungsstück 19 zum Einführen einer Vorschubkolbenstange aufweist.

In Figur 3b ist ein Vorratsbehälter 14 in zweiter Ausgestaltung mit Füßen 15 gezeigt, dessen Boden 16 vollkommen geschlossen ist. In die obere Öffnung 32 ist eine Verdrängerplatte 18 eingesetzt mit einem Kupplungs- oder Adapterstück 19 zur Aufnahme eines Vorschubkolbenstange. Die Verdrängerplatte 18 wird von einem Tauchrohr 20 durchsetzt, das in der Verdrängerplatte 18 gleitend geführt ist und tief in den Behälter 14 reicht, wobei am Austrittsende Ablaßventilmittel 17 angeordnet sind.

Die Ventilmittel weisen jeweils Adapterstücke 27 zum Eingriff entsprechender Stellmittel in einer Dosierstation auf.

In den Figuren 4a, 4b ist jeweils eine Dosierstation gezeigt, wobei in diese ein Vorratsbehälter 14 mit Einzelheiten nach Figur 3 eingesetzt ist. Es ist jeweils eine Verdrängereinheit 21 mit einer Vorschubkolbenstange 22 erkennbar, die mit dem Kupplungsstück 19 koppelbar ist. Weiterhin ist eine Verstelleinheit 23 gezeigt, die Eingriffsmittel für das Adapterstück 27 der Ablaßventilmittel 17 umfaßt. Unterhalb des Ablaßventils 17 steht jeweils ein Dosier- oder Sammelbehälter 24 auf einer Waage 25, wobei in Figur 4a die Waage 25a auf einem Sockel 26 aufgesetzt ist, während in Figur 4b die Waage 25b eine im Boden eingelassene Waage darstellt und der Behälter fahrbar ist.

In Figur 5 ist das Datenverarbeitungs- und Steuersystem symbolisch dargestellt, wobei zentral ein Server-PC 28 vorgesehen ist, der Verbindungen zu einem Lagerverwaltungssystem 33, einem Fördersteuerungssystem 34, einem doppelten Dosiersteuerungssystem 35a, 35b hat und der außerdem angebunden ist an eine Auftragsverwaltungseinheit 29 und eine Rezepturverwaltungseinheit 30.

## Patentansprüche

1. Verfahren zum Dosieren mehrerer Komponenten von fließfähigen Stoffen, insbesondere von Druckfarben, mittels einer Vorrichtung
mit Mitteln zur Bevorratung (1), in denen eine Mehrzahl von Vorratsbehältern (14) für verschiedene Komponenten enthalten sind,
mit Vorratsbehältern (14), die jeweils Auslaßventilmittel (17) aufweisen,
mit zumindest einer Dosierstation (3), zu der die Vorratsbehälter (14) zuführbar sind,
mit Betätigungsmitteln (23) an der Dosierstation (3), mit denen die Auslaßventilmittel (17) betätigbar sind,
mit Fördermitteln (2), mit denen die Vorratsbehälter (14) der zumindest einen Dosierstation (3) zugeführt werden können,
dadurch gekennzeichnet,
daß einzelne Vorratsbehälter (14) unabhängig voneinander den Mitteln zur Bevorratung (1) entnommen, der Dosierstation (3) zugeführt und in die Mittel zur Bevorratung (1) zurückgeführt werden und daß sie dabei zumindest eine schleifenförmige Bahn durchlaufen.

2. Vorrichtung zum Dosieren mehrerer Komponenten von fließfähigen Stoffen, insbesondere von Druckfarben, mit Mitteln zur Bevorratung (1), in denen eine Mehrzahl von Vorratsbehältern (14) für verschiedene Komponenten enthalten sind,
mit Vorratsbehältern (14), die jeweils Auslaßventilmittel (17) aufweisen,
mit zumindest einer Dosierstation (3), zu der die Vorratsbehälter (14) zuführbar sind,
mit Betätigungsmitteln (23) an der Dosierstation (3), mit denen die Auslaßventilmittel (17) betätigbar sind,
mit Fördermitteln (2), mit denen die Vorratsbehälter (14) der zumindest einen Dosierstation (3) zugeführt werden können,
dadurch gekennzeichnet,
daß die Mittel zur Bevorratung (1) von einem Lager zum Einstellen der Vorratsbehälter (14) gebildet werden,
daß die Fördermittel (2) zum Entnehmen und Rückführen von einzelnen Vorratsbehältern (14) in voneinander unabhängiger Weise ausgebildet sind und
daß die Fördermittel (2) zumindest eine Bahnschleife (9) umfassen, an die die zumindest eine Dosierstation (3) angebunden ist.

3. Vorrichtung nach Anspruch 2,
dadurch gekennzeichnet,
daß das Lager ein chaotisch organisiertes Lager mit wechselnden Einstellplätzen für einzelne Vorratsbehälter (14) ist.

4. Vorrichtung nach Anspruch 2 oder 3,
dadurch gekennzeichnet,
daß die Fördermittel (2) Rollenbahnen, Hängebahnen, Flurfördermittel oder dergleichen - insbesondere im Bereich der Bahnschleife (9) - umfassen.

5. Vorrichtung nach einem der Ansprüche 2 bis 4,
dadurch gekennzeichnet,
daß die Fördermittel (2) im Lager fest installierte Aufzugs- und Horizontalfördermittel umfassen.

6. Vorrichtung nach einem der Ansprüche 2 bis 5,
dadurch gekennzeichnet,
daß die Fördermittel (2) ein Staplerfahrzeug umfassen.

7. Vorrichtung nach einem der Ansprüche 2 bis 6,
dadurch gekennzeichnet,
daß die zumindest eine Dosierstation (3) über Zu- und Rückführstrecken (6a, 6b) in die Bahnschleife (9) einbezogen ist.

8. Vorrichtung nach Anspruch 7,
dadurch gekennzeichnet,
daß die Zu- und Rückführstrecken (6a, 6b) zur Dosierstation (3) zu einer Stichbahn mit Anschluß an die Bahnschleife (9) vereint sind.

9. Vorrichtung nach einem der Ansprüche 2 bis 8,
dadurch gekennzeichnet,
daß mehrere Dosierstationen (3a, 3b) innerhalb einer Bahnschleife (9) angeordnet sind.

10. Vorrichtung nach einem der Ansprüche 2 bis 9,
dadurch gekennzeichnet,
daß jeweils eine Bypaßbahn (11a, 11b) parallel zu einer Dosierstation (3a, 3b) ausgebildet ist.

11. Vorrichtung nach einem der Ansprüche 2 bis 10,
dadurch gekennzeichnet,
daß zumindest eine Kurzschlußbahn (12) in der Bahnschleife (9) zwischen einem Rückführstrang (9b) und einem Zuführstrang (9a) eingezogen ist.

12. Vorrichtung nach einem der Ansprüche 2 bis 11,
dadurch gekennzeichnet,
daß zumindest eine Pufferschleife (11, 12) zur Zwischenlagerung mehrerer Vorratsbehälter (14) vorgesehen ist.

13. Vorrichtung nach einem der Ansprüche 2 bis 12,
dadurch gekennzeichnet,
daß die Bahnschleife (9) und ggfs. die Pufferschleifen (11, 12) als Einbahnwege ausgebildet sind.

14. Vorrichtung nach einem der Ansprüche 2 bis 13,
dadurch gekennzeichnet,
daß die Verbindung zwischen dem Lager und der zumindest einen Bahnschleife (9) eine Einsteuer- und eine Rückführstrecke (5a, 5b) umfaßt.

15. Vorrichtung nach einem der Ansprüche 2 bis 14,
dadurch gekennzeichnet,
daß die Vorratsbehälter (14) jeweils eine in eine Deckelöffnung eingesetzte Verdrängerplatte (18) aufweisen.

16. Vorrichtung nach Anspruch 15,
dadurch gekennzeichnet,
daß die Dosierstation (3) ein auf die Verdrängerplatte (18) eines eingestellen Vorratsbehälters (14) einwirkendes Vorschubelement (21) aufweist.

17. Vorrichtung nach einem der Ansprüche 2 bis 16,
dadurch gekennzeichnet,
daß die Dosierstation (3) ein auf die Auslaßventilmittel (17) eines eingestellten Vorratsbehälters (14) einwirkendes Ventilsteuerelement (23) aufweist.

18. Vorrichtung nach einem der Ansprüche 2 bis 17,
dadurch gekennzeichnet,
daß die Dosierstation (3) eine Wägeeinrichtung (25) umfaßt und das Ventilsteuerelement (23) gewichtsgeregelt die Auslaßventilmittel (17) betätigt.

19. Vorrichtung nach einem der Ansprüche 2 bis 17,
dadurch gekennzeichnet,
daß das Ventilsteuerelement (23) zeitgesteuert die Auslaßventilmittel (17) betätigt.

20. Vorrichtung nach einem der Ansprüche 2 bis 19,
dadurch gekennzeichnet,
daß die Vorratsbehälter (14) Kodierungen tragen und die Fördermittel (2) Erkennungsmittel (13) für die Kodierungen umfassen.

21. Vorrichtung nach einem der Ansprüche 2 bis 20,
dadurch gekennzeichnet,
daß die Kodierungen optischer Art sind (Barcode).

22. Vorrichtung nach einem der Ansprüche 2 bis 21,
dadurch gekennzeichnet,
daß die Kodierungen elektronischer Art sind (Mikrochip).

23. Vorrichtung nach einem der Ansprüche 2 bis 22,
dadurch gekennzeichnet,
daß die Wägevorrichtung (25) in der Dosierstation (3) das Gewicht eines unter den Auslaßventilmitteln (17) eingestellten Dosier- oder Sammelbehälters (24) erfaßt.

24. Vorrichtung nach einem der Ansprüche 2 bis 23,
dadurch gekennzeichnet,
daß eine Verbindungsbahn (31) zum Einsteuern von Dosieroder Sammelbehältern (24) in das Lager vorgesehen ist.

25. Vorrichtung nach einem der Ansprüche 2 bis 24,
gekennzeichnet durch
einen Rechner zur zentralen Steuerung mit Mitteln (33) zur Verwaltung der Lagerbelegung, von Behälterinhalten, Mitteln (30, 29) zur Verwaltung von Rezepturen und Aufträgen und mit Mitteln (34) zur Steuerung der Fördermittel (2) für die Vorratsbehälter (14) und Mitteln (35) zur Steuerung der Betätigungsmittel (23) für die Auslaßventilmittel (17).

## Claims

1. A method of dispensing several components of flowable substances, especially of printing inks, by means of a device,
having storage means (1) in which there is contained a plurality of storage containers (14) for different components,
having storage containers (14) which each comprise outlet valve means (17),
having at least one dispensing station (3) into which the storage containers (14) can be fed,
having actuating means (23) at the dispensing station (3), by which actuating means the outlet valve means (17) can be actuated,
having conveying means (2) by means of which the storage containers (14) can be fed into the at least one dispensing station (3),
characterised in
that individual storage containers (14) can be independently removed from the storage means (1), fed into the dispensing station and returned into the storage means (1) and that, in the process, the individual storage containers (14) pass through at least one loop-shaped path.

2. A device for dispensing several components of flowable substances, especially of printing inks,
having storage means (1) in which there is contained a plurality of storage containers (14) for different components,
having storage containers (14) which each comprise outlet valve means (17),
having at least one dispensing station (3) into which the storage containers (14) can be fed,
having actuating means (23) at the dispensing station (3), by which actuating means the outlet valve means (17) can be actuated,
having conveying means (2) by means of which the storage containers (14) can be fed into the at least one dispensing station (3),
characterised in
that the storage means (1) are formed by a store for storing the storage containers (14),
that the conveying means (2) for removing and returning individual storage containers (14) are formed independently of one another and
that the conveying means (2) comprise at least one track loop (9) to which the at least one dispensing station (3) is connected.

3. A device according to claim 2,
charcterised in
that the store is a chaotically organised store with changing places for individual storage containers (14).

4. A device according to claim 2 or 3,
characterised in
that the conveying means (2) comprise roller tracks, suspended tracks, floor conveying means or the like, especially in the region of the track loop (9).

5. A device according to any one of claims 2 to 4,
characterised in
that the conveying means (2) comprise lifting and horizontal conveying means which are firmly installed in the store.

6. A device according to any one of claims 2 to 5,
characterised in
that the conveying means (2) comprise a stacking vehicle.

7. A device according to any one of claims 2 to 6,
characterised in
that the at least one dispensing station (3) is included in the track loop (9) via feeding and returning lines (6a, 6b).

8. A device according to claim 7,
characterised in
that the feeding and returning lines (6a, 6b) for the dispensing station (3) are combined to form a branch track connected to the track loop (9).

9. A device according to any one of claims 2 to 8,
characterised in
that several dispensing stations (3a, 3b) are arranged within one track loop (9).

10. A device according to any one of claims 2 to 9,
characterised in
that one bypass track (11a, 11b) each is provided so as to extend parallel to a dispensing station (3a, 3b).

11. A device according to any one of claims 2 to 10,
characterised in
that at least one short-circuit track (12) is included in the track loop (9) between a returning line (9b) and a feeding line (9a).

12. A device according to any one of claims 2 to 11,
characterised in
that at least one buffer loop (11, 12) is provided for the intermediate storage of several storage containers (14).

13. A device according to any one of claims 2 to 12,
characterised in
that the track loop (9) and optionally the buffer loops (11, 12) are provided in the form of one-way tracks.

14. A device according to any one of claims 2 to 13,
characterised in
that the connection between the store and the at least one track loop (9) comprises a feeding and a returning line (5a, 5b).

15. A device according to any one of claims 2 to 14,
characterised in
that the storage containers (14) each comprise a displacement plate (18) inserted into a cover aperture.

16. A device according to claim 15,
characterised in
that the dispensing station (3) comprises a forward feed element (21) acting on the displacement plate (18) of a fed-in storage container (14).

17. A device according to any one of claims 2 to 16,
characterised in
that the dispensing station (3) comprises a valve controlling element (23) acting on the outlet valve means (17) of a fed-in storage container (14).

18. A device according to any one of claims 2 to 17,
characterised in
that the dispensing station (3) comprises a weighing device (25) and that the valve controlling element (23) actuatates the outlet valve means (17) as a function of weight.

19. A device according to any one of claims 2 to 17,
characterised in
that the valve controlling element (23) actuates the outlet valve means (17) as a function of time.

20. A device according to any one of claims 2 to 19,
characterised in
that the storage containers (14) carry codes and that the conveying means (2) comprise identification means (13) for the codes.

21. A device according to any one of claims 2 to 20,
characterised in
that the codes are of a visual nature (bar codes).

22. A device according to any one of claims 2 to 21,
characterised in
that the codes are of an electronic nature (microchips).

23. A device according to any one of claims 2 to 22,
characterised in
that the weighing device (25) in the dispensing device (3) records the weight of a dispensing or collecting container (24) positioned underneath the outlet valve means (17).

24. A device according to any one of claims 2 to 23,
characterised in
that there is provided a connecting track (31) by means of which it is possible to move dispensing or collecting containers (24) into the store.

25. A device acccording to any one of claims 2 to 24,
characterised by
a computer for central controlling purposes, having means (33) for administering the occupation of the store and the container contents, means (30, 29) for administering recipes and orders, and having means (34) for controlling the conveying means (2) for the storage containers (14) and means (35) for controlling the actuating means (23) for the outlet valve means (17).

## Revendications

1. Procédé pour doser plusieurs constituants de substances fluides, notamment d'encres d'impression, à l'aide d'un dispositif comportant
des moyens d'approvisionnement (1), qui contiennent une multiplicité de réservoirs (14) pour différents constituants,
des réservoirs (14), qui comportent chacun un moyen en forme de soupape de sortie (17),
au moins un poste de dosage (3) auquel les réservoirs (14) peuvent être amenés, et
des moyens d'actionnement (23) situés sur le poste de dosage (3) et à l'aide desquels les moyens formant soupape de sortie (17) peuvent être actionnés,
des moyens d'entraînement (2), à l'aide desquels les réservoirs (14) peuvent être amenés au moins à un poste de dosage (3),
caractérisé en ce
que des réservoirs individuels (14) sont prélevés, indépendamment les uns des autres, des moyens d'approvisionnement (1), sont envoyés au poste de dosage (3) et sont ramenés dans les moyens d'approvisionnement (1) et qu'ils parcourent au moins un trajet en forme de boucle.

2. Dispositif pour doser plusieurs constituants de substances fluides, notamment d'encres d'impression, à l'aide d'un dispositif comportant
des moyens d'approvisionnement (1), qui contiennent une multiplicité de réservoirs (14) pour différents constituants,
des réservoirs (14), qui comportent chacun un moyen en forme de soupape de sortie (17),
au moins un poste de dosage (3) auquel les réservoirs (14) peuvent être amenés, et
des moyens d'actionnement (23) situés sur le poste de dosage (3) et à l'aide desquels les moyens formant soupape de sortie (17) peuvent être actionnés,
des moyens d'entraînement (2), à l'aide desquels les réservoirs (14) peuvent être amenés au moins à un poste de dosage (3),
caractérisé en ce
que les moyens d'approvisionnement (1) sont formés par un magasin pour la mise en place des réservoirs (14),
que les moyens d'entraînement (2) sont agencés de manière à prélever et renvoyer des réservoirs individuels (14) indépendamment les uns des autres, et
que les moyens d'entraînement (2) comprennent au moins un trajet en forme de boucle (9), auquel est relié au moins un poste de dosage (3).

3. Dispositif selon la revendication 2, caractérisé en
que le magasin est un magasin organisé d'une manière chaotique comportant des emplacements de mise en place qui alternent pour des réservoirs individuels (14).

4. Dispositif selon la revendication 2 ou 3, caractérisé en ce
que les moyens d'entraînement (2) comprennent des tables à rouleaux, des convoyeurs suspendus, des moyens d'entraînement situés au sol et analogues, notamment dans la zone du trajet en boucle (9).

5. Dispositif selon l'une des revendications 2 à 4, caractérisé en ce
que les moyens d'entraînement (2) comprennent des moyens d'entraînement ascensionnel et des moyens d'entraînement horizontal montés de façon fixe dans le magasin.

6. Dispositif selon l'une des revendications 2 à 5, caractérisé en ce
que les moyens d'entraînement (2) comprennent un véhicule formant chariot élévateur.

7. Dispositif selon l'une des revendications 2 à 6, caractérisé en ce
que le au moins un poste de dosage (3) est inséré dans le trajet en boucle (9) au moyen de sections d'amenée et de retour (6a,6b).

8. Dispositif selon la revendication 7, caractérisé en ce
que les sections d'amenée et de retour (6a,6b) aboutissant au poste de dosage (3) sont réunies pour former un embranchement avec un raccordement au trajet en boucle (9).

9. Dispositif selon l'une des revendications 2 à 8, caractérisé en ce
que plusieurs postes de dosage (3a,3b) sont disposés à l'intérieur d'un trajet en boucle (9).

10. Dispositif selon l'une des revendications 2 à 9, caractérisé en ce
qu'un trajet de by-pass (11a,11b) est formé en parallèle avec un poste de dosage (3a,3b).

11. Dispositif selon l'une des revendications 2 à 10, caractérisé en ce
qu'au moins un trajet de court-circuit (12) est inséré dans le trajet en boucle (9) entre la voie de retour (9b) et une voie d'amenée (9a).

12. Dispositif selon l'une des revendications 2 à 11, caractérisé en ce
qu'au moins une boucle tampon (11,12) est prévue pour le stockage temporaire de plusieurs réservoirs (14).

13. Dispositif selon l'une des revendications 2 à 12, caractérisé en ce
que le trajet en boucle (9) et éventuellement les boucles tampons (11,12) sont agencés sous la forme de trajets à une voie.

14. Dispositif selon l'une des revendications 2 à 13, caractérisé en ce
que la liaison entre le magasin et le au moins un trajet en boucle (9) comprend une section de commande et une section de retour (5a,5b).

15. Dispositif selon l'une des revendications 2 à 14, caractérisé en ce
que les réservoirs (14) possèdent chacun une plaque de refoulement (18) insérée dans une ouverture de couvercle.

16. Dispositif selon la revendication 15, caractérisé en ce
que le poste de dosage (3) comporte un élément de poussée (21), qui agit sur la plaque de refoulement (18) d'un réservoir (14) mis en place.

17. Dispositif selon l'une des revendications 2 à 16, caractérisé en ce
que le poste de dosage (3) comporte un élément de commande de soupape (23) agissant sur les moyens en forme de soupape de sortie (17) d'un réservoir (14) mis en place.

18. Dispositif selon l'une des revendications 2 à 17, caractérisé en ce
que le poste de dosage (3) comprend un dispositif de pesée (25) et que l'élément de commande de soupape (23) actionne, d'une manière réglée en fonction du poids, les moyens formant soupape de sortie (17).

19. Dispositif selon l'une des revendications 2 à 17, caractérisé en ce
que l'élément de soupape de commande (23) actionne les moyens en forme de soupape de sortie (17) d'une manière commandée dans le temps.

20. Dispositif selon l'une des revendications 2 à 19, caractérisé en ce
que les réservoirs (14) portent des codes et que les moyens d'entraînement (2) comprennent des moyens d'identification (13) pour les codes.

21. Dispositif selon l'une des revendications 2 à 20, caractérisé en ce
que les codes sont de type optique (codes à barres).

22. Dispositif selon l'une des revendications 2 à 21, caractérisé en ce
que les codes sont de type électronique (microplaquette).

23. Dispositif selon l'une des revendications 2 à 22, caractérisé en ce
que le dispositif de pesée (25) dans le poste de dosage (3) détecte le poids d'un récipient de dosage ou de collecte (24) qui est mis en place au-dessous des moyens en forme de soupape de sortie (17).

24. Dispositif selon l'une des revendications 2 à 23, caractérisé en ce
qu'un trajet de liaison (31) est prévu pour l'introduction commandée de récipients de dosage ou de collecte (24) dans le magasin.

25. Dispositif selon l'une des revendications 2 à 24, caractérisé par
un calculateur pour la commande centrale, comportant des moyens (33) pour gérer l'occupation du magasin, des contenus de récipients, des moyens (30,29) pour gérer des compositions et des ordres et des moyens (34) pour commander les moyens d'entraînement (2) pour les réservoirs (14) et les moyens (35) pour commander les moyens d'actionnement (23) pour les moyens en forme de soupape de sortie (17).
